# EUROPEAN PATENT APPLICATION

(11) **EP 4 674 712 A1**
(43) Date of publication of application: **07.01.2026**
(21) Application number: 25183203.6
(22) Date of filing: 17.06.2025
(51) Int. Cl.: B60T 17/08, F16D 65/28

(54) **SPRING BRAKE ACTUATORS**

(30) Priority: 18.06.2024 US 202463661211 P; 10.06.2025 US 202519233626
(71) Applicant: TSE Brakes, Inc., Cullman, AL 35055 (US)
(72) Inventor: Gaither-Ho, Kok, Cullman, 35055 (US); Cate, Darin, Cullman, 35055 (US)
(74) Representative: Håmsø Patentbyrå AS

(57) **Abstract**

A spring brake actuator for a vehicle includes a spring brake housing defining a spring brake chamber, a service brake housing defining a service brake chamber, a push rod configured to extend from the service brake chamber to engage a wheel brake of the vehicle, and an actuator rod in the spring brake chamber and movable to extend into and retract from the service brake chamber. As the spring brake chamber is pressurized, air flows from the spring brake chamber through the actuator rod to the service brake chamber, and as the spring brake chamber is depressurized, air flows from the service brake chamber through the actuator rod to the spring brake chamber.

## Description

### CROSS-REFERENCE TO RELATED APPLICATION

The present disclosure is based on and claims priority to U.S. Provisional Patent Application No. 63/661,211 filed June 18, 2024 and U.S. Utility Patent Application. No. 19/233,626 filed June 10, 2025.

### FIELD

The present disclosure relates to vehicle braking systems, including but not limited to pneumatically-operated spring brake actuators having a push rod that engages a wheel brake.

### BACKGROUND

The following U.S. Patents present background information within the relevant technical field.

U.S. Patent No. 10,913,439 discloses a spring brake actuator for braking a wheel of a vehicle and having a push rod assembly with a base located in a service brake chamber and a push rod extending from a service brake chamber. Pneumatic activation of the spring brake actuator causes the push rod to further extend out of the service brake chamber to thereby engage a wheel brake with a wheel of the vehicle. Pneumatic deactivation of the spring brake actuator causes the push rod to retract back into the service brake chamber to thereby disengage the wheel brake from the wheel of the vehicle. The push rod extends between a first end portion that is fixed to the base and an opposite, second end portion that is removably coupled to the first end portion so that the second end portion is manually attachable and detachable from the push rod assembly.

U.S. Patent No. 11,639,166 discloses a spring brake actuator for applying a brake of a vehicle having a housing containing a diaphragm that separates the housing into first and second chambers. A clutch actuator device is for selectively compressing a compression spring such that the spring brake actuator is operable in a plurality of states including a parking state, driving state, and a braking state.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

In certain examples, a spring brake actuator for a vehicle includes a spring brake housing defining a spring brake chamber, a service brake housing defining a service brake chamber, a push rod configured to extend from the service brake chamber to engage a wheel brake of the vehicle, and an actuator rod in the spring brake chamber and movable to extend into and retract from the service brake chamber. As the spring brake chamber is pressurized, air flows from the spring brake chamber through the actuator rod to the service brake chamber, and as the spring brake chamber is depressurized, air flows from the service brake chamber through the actuator rod to the spring brake chamber.

In independent aspects, the spring brake housing includes a first spring shell and a second spring shell, and wherein the second spring shell is devoid of holes that allow air to pass into the spring brake chamber from atmosphere and/or out of the spring brake chamber to the atmosphere as the spring brake chamber is pressurized and depressurized. In independent aspects, the actuator rod includes an opening, a hole, and a bore extending between the opening and the hole. The air flows through the opening, the hole, and the bore as the air flows between the service brake chamber and the spring brake chamber. In independent aspects, the actuator rod includes a first rod end and an opposite second rod end, and the opening is at the first rod end and the hole is at the second rod end. In independent aspects, a second diaphragm is located in the spring brake chamber such that the second diaphragm divides the spring brake chamber into a first spring chamber and a second spring chamber. The second diaphragm includes a diaphragm bore in which the actuator rod is received. In independent aspects, a spring plate is in the spring brake chamber, and the spring plate defines a channel in which the second diaphragm is received. In independent aspects, at least a portion of the second diaphragm is sandwiched between the actuator rod and the spring plate. In independent aspects, the second diaphragm includes a flange received in the channel and a lip that is coupled to the spring brake housing. In independent aspects, a guide sleeve is in the spring brake chamber and configured to guide movement of the actuator rod into and out of the service brake chamber. In independent aspects, the actuator rod includes a hole through which the air flows as the air flows between the service brake chamber and the spring brake chamber, and when the actuator rod is retracted from the service brake chamber, the guide sleeve covers the hole. In independent aspects, the actuator rod includes a hole through which air flows as the air flows between the service brake chamber and the spring brake chamber and the guide sleeve includes a pair of gaskets such that fluid-tight seals are formed between the guide sleeve and the actuator rod. When the actuator rod is retracted from the service brake chamber, the hole is located between the pair of gaskets and the pair of gaskets prevent air flow between the spring brake chamber and the service brake chamber. In independent aspects, the actuator rod includes a hole through which air flows as the air flows between the service brake chamber and the spring brake chamber and a guide sleeve is in the spring brake chamber that guides movement of the actuator rod. The guide sleeve includes a pair of gaskets that form fluid-tight seals with the actuator rod such that when the hole is located between the gaskets, air does not flow between the service brake chamber and the spring brake chamber. In independent aspects, the guide sleeve includes a pair of channels and each channel in the pair of channels receives one gasket of the pair of gaskets. In independent aspects, the spring brake actuator is moveable into and between a braking state in which the spring brake actuator applies braking forces to the vehicle and a driving state in which the spring brake actuator does not apply braking forces to the vehicle. When the spring brake chamber is pressurized the push rod is retracted into the service brake chamber, the actuator rod is retracted from the service brake chamber, air flows from the spring brake chamber through the actuator rod to the service brake chamber, and the spring brake actuator is moved from the braking state to the driving state. When the spring brake chamber is depressurized the push rod is extended further from the service brake chamber, the actuator rod is extended into the service brake chamber, air flows from the service brake chamber through the actuator rod to the spring brake chamber, and the spring brake actuator is moved from the driving state to the braking state. In independent aspects, a first diaphragm is located in the service brake chamber such that the first diaphragm divides the service brake chamber into a first service chamber and a second service chamber, a return spring located in the first service chamber, a second diaphragm located in the spring brake chamber such that the second diaphragm divides the spring brake chamber into a first spring chamber and a second spring chamber, and a spring located in the second spring chamber. As the first spring chamber is pressurized, air flows from the second spring chamber through the actuator rod to the second service chamber, and as the first spring chamber is depressurized, air flows from the second service chamber through the actuator rod to the second spring chamber. In independent aspects, the actuator rod is coupled to the second diaphragm and is moved with the second diaphragm. In independent aspects, a spring brake port is on the spring brake housing that is configured to permit admission of pressurizd air into the first spring chamber and release of the pressurized air from the first spring chamber. In independent aspects, the second diaphragm includes a diaphragm bore in which the actuator rod is received and a spring plate is in the spring brake chamber, the spring plate defines a channel in which the second diaphragm is received. At least a portion of the second diaphragm is sandwiched between the actuator rod and the spring plate. In independent aspects, a guide sleeve is in the spring brake chamber and configured to guide movement of the actuator rod into and out of the service brake chamber and the actuator rod includes a hole through which air flows as the air flows between the service brake chamber and the spring brake chamber. The guide sleeve includes a pair of gaskets such that fluid-tight seals are formed between the guide sleeve and the actuator rod, and when the actuator rod is retracted from the service brake chamber, the hole is located between the pair of gaskets and the pair of gaskets prevent air flow between the spring brake chamber and the service brake chamber.

In certain examples, a spring brake actuator for a vehicle includes a spring brake housing defining a spring brake chamber, a service brake housing defining a service brake chamber, a push rod configured to extend from the service brake chamber to engage a wheel brake of the vehicle, and an actuator rod in the spring brake chamber and movable to extend into and retract from the service brake chamber. As the spring brake chamber is pressurized, the actuator rod is configured to vent air therethrough from the spring brake chamber to the service brake chamber, and as the spring brake chamber is depressurized, the actuator rod is configured to vent air therethrough from the service brake chamber to the spring brake chamber.

Various other features, objects, and advantages will be made apparent from the following description taken together with the drawings.

### BRIEF DESCRIPTION OF THE DRAWINGS

The present disclosure is described with reference to the following Figures. The same numbers are used throughout the Figures to reference like features and like components.
Fig. 1 is a cross-sectional view of an example spring brake actuator according to the present disclosure with the spring brake actuator in a braking state.
Fig. 2 is an enlarged view of the spring brake actuator of Fig. 1.
Figs. 3-6 are cross-sectional views of the spring brake actuator of Fig. 1 in various operational states.

### DETAILED DESCRIPTION

Conventional heavy trucks, trailers, and other commercial vehicles typically use brake systems including conventional pneumatically-operated spring brake actuators which provide the braking forces necessary to stop the vehicle. Such conventional systems typically include a brake pedal positioned on the floor of the driver's cab or compartment of the vehicle which, upon activation, causes pressurized air from an air reservoir to enter an air chamber of the conventional spring brake actuator. The conventional spring brake actuator includes a push rod that is caused to extend out of the spring brake actuator to activate a wheel brake having brake shoes with a brake lining material that is pressed against a brake drum at the vehicle wheel-end. The wheel brake often includes a slack adjustor which turns a cam roller via a camshaft to force the brake shoes to engage the brake drum to stop the vehicle. Releasing the pressurized air from the air chamber allows a spring within the air chamber to retract the push rod back to its original position. See above-incorporated U.S. Patent No. 10,913,439 for example conventional spring brake actuators.

The present inventors endeavored to develop new, improved spring brake actuators with sealed chambers that prevent moisture and/or debris from entering the chamber. As such, critical components, such as a parking spring and a spring plate, are not exposed to moisture and/or debris, which may corrode these components. As such, the durability of these components and the spring brake actuator in general is increased. Examples of the new spring brake actuators of the present disclosure are described herein.

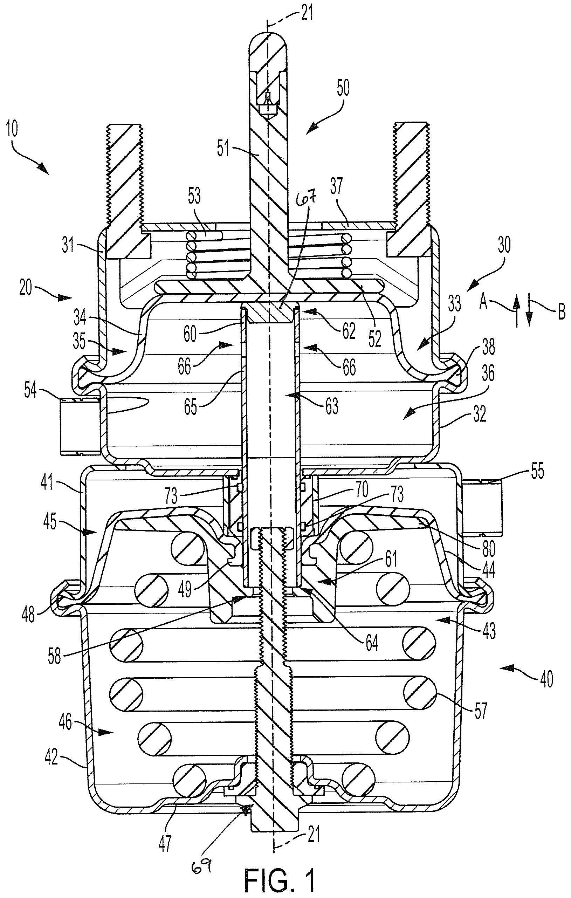

Fig. 1 depicts an example system 10 of the present disclosure. The system 10 includes a spring brake actuator 20 for applying a wheel brake of a vehicle. The spring brake actuator 20 extends along a center axis 21 and has a service brake housing 30 and a spring brake housing 40.

The service brake housing 30 includes a pair of shells, namely a first service shell 31 and a second service shell 32, that are coupled together and define a service brake chamber 33 therebetween. A first diaphragm 34 is located in the service brake chamber 33 and has a lip 38 sandwiched and held between the service shells 31, 32.

The first diaphragm 34 divides the service brake chamber 33 into a first service chamber 35 and a second service chamber 36. A push rod 50 is located in the first service chamber 35. The push rod 50 has an end flange 52 abutting the first diaphragm 34 and a rod 51 extending out of the service brake chamber 33. The rod 51 extends through a hole in an end wall 37 of the first service shell 31. During operation of the spring brake actuator 20, the first diaphragm 34 is caused to flex back and forth in the service brake chamber 33 thereby reciprocating the rod 51 out of and back into the service brake chamber 33. The rod 51 is coupled to a lever arm of a brake caliper or conventional slack adjuster or cam roller (not shown). The caliper, slack adjuster and/or cam roller is configured to translate the reciprocal movement of the push rod 50 to a wheel brake for the vehicle.

A return spring 53 is also located in the first service chamber 35 and is compressed between the end wall 37 and the end flange 52. The return spring 53 biases the rod 51 in a second axial direction (arrow B) into the service brake chamber 33 and opposes movement of the rod 51 in a first axial direction (arrow A) out of the service brake chamber 33.

A service port 54 on the second service shell 32 permits the admission and release of pressurized air into the second service chamber 36. The pressurized air can be provided by a conventional source of pressurized air located on the vehicle.

The spring brake housing 40 includes a pair of spring shells, namely a first spring shell 41 and a second spring shell 42, that are coupled together and define a spring brake chamber 43. A second diaphragm 44 is located in the spring brake chamber 43 and has a lip 48 that is coupled to, sandwiched, and held between the shells 41, 42. The second diaphragm 44 divides the spring brake chamber 43 into a first spring chamber 45 and a second spring chamber 46.

An actuator rod 60 is located in the spring brake chamber 43 and is movable into the second service chamber 36. Note that the first spring shell 41 and the second service shell 32 are coupled together and each has an aligned hole (not depicted) through which the actuator rod 60 can move between the spring brake chamber 43 and the service brake chamber 33. During operation, the second diaphragm 44 is caused to flex back and forth in the spring brake chamber 43 such that the actuator rod 60 is reciprocated into the service brake chamber 33 and back into the spring brake chamber 43 (described further herein).

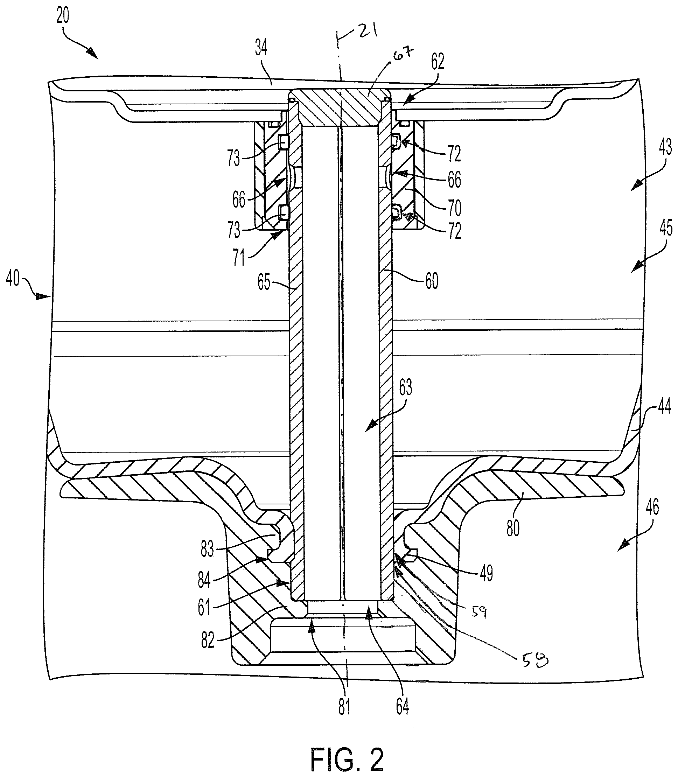

The actuator rod 60 is depicted in greater detail in Fig. 2. The actuator rod 60 has a first rod end 61 coupled to a spring plate 80 (described further herein) and an opposite second rod end 62 that is slidably received in a guide sleeve 70 (described further herein). The first rod end 61 has an opening 64. In certain examples, the actuator rod 60 axially extends along the center axis 21. A bore 63 axially extends in the actuator rod 60 between the first rod end 61 and the second rod end 62. The actuator rod 60 has a sidewall 65 with one or more holes 66 defined therein. The holes 66 are located near the second rod end 62. The holes 66 are in fluid communication with the bore 63 and the opening 64. Note that in certain examples, the second rod end 62 is generally a closed end with a cap 67. As will be described in greater detail hereinbelow, air in the spring brake actuator 20 can pass through the opening 64, the bore 63, and holes(s) 66 between the second spring chamber 46 and the second service chamber 36. In certain examples, a two-way release bolt assembly 69 is coupled to the shell 42 and extends into the bore 63 in the actuator rod 60.

As noted above, the first rod end 61 is coupled to the spring plate 80, and a spring 57 is located in the second spring chamber 46 between the spring plate 80 and the second spring shell 42. As will be described herein below, when the first spring chamber 45 is pressurized, the second diaphragm 44 flexes in the second axial direction (arrow B) and the spring plate 80 is moved in the second axial direction thereby acting on and axially compressing the spring 57. When the first spring chamber 45 is not pressurized, the second diaphragm 44 flexes in the first axial direction (arrow A) and the spring 57 axially extends in the first axial direction thereby moving the spring plate 80 and the actuator rod 60 in the first axial direction.

The spring plate 80 has a plate hole 81 that overlaps and/or aligns with the opening 64 in the actuator rod 60. The spring plate 80 also includes a first lip 82 against which the first rod end 61 is seated and a second lip 83 that at least partially defines a channel 84 in which a portion of the second diaphragm 44 is received. At least a portion of the second diaphragm 44 is sandwiched between the first rod end 61 of the actuator rod 60 and the spring plate 80. In the example depicted in Fig. 2, the second diaphragm 44 includes a flange 49 that is received into the channel 84 and a diaphragm hole 58 that is adjacent to the first rod end 61. The diaphragm hole 58 can be in fluid communication with and/or align with the opening 64 in the actuator rod 60 and the plate hole 81. As such, air in the spring brake actuator 20 can pass through the diaphragm hole 58, the plate hole 81, and the opening 64 to and from the bore 63 in the actuator rod 60. The second diaphragm 44 has a diaphragm bore 59 that receives the first rod end 61. Note that the interface between the second diaphragm 44, the actuator rod 60, and/or the spring plate 80 form one or more fluid-tight seals such that the first spring chamber 45 can be selectively pressurized without air leaking or flowing from the first spring chamber 45 into the second spring chamber 46.

The second rod end 62 extends into and/or through the guide sleeve 70 (as noted above) which is located in the first spring chamber 45 and coupled to the first spring shell 41. The guide sleeve 70 guides and permits reciprocation of the actuator rod 60 into and out of the second service chamber 36 of the service brake chamber 33. The guide sleeve 70 includes a sleeve bore 71 for receiving the actuator rod 60 and one or more channels 72 in which gaskets 73 (e.g., o-rings) are located. The gaskets 73 and the actuator rod 60 form fluid-tight seals therebetween.

A spring brake port 55 on the first spring shell 41 permits the admission and release of pressurized air into the first spring chamber 45. The pressurized air can be provided by a conventional source of pressurized air located on the vehicle.

Referring back to Fig. 1, the spring brake actuator 20 is in a parking state in which the spring 57 is extended and the actuator rod 60 extends into the service brake chamber 33. The actuator rod 60 has engaged and pushed the first diaphragm 34 and the push rod 50 in the first axial direction (arrow A) such that the rod 51 axially extends out of the spring brake chamber 43 in the first axial direction. In the parking state, the rod 51 of the push rod 50 extends from the spring brake actuator 20 to cause braking forces to be applied to the wheel of the vehicle thereby preventing inadvertent movement of the vehicle.

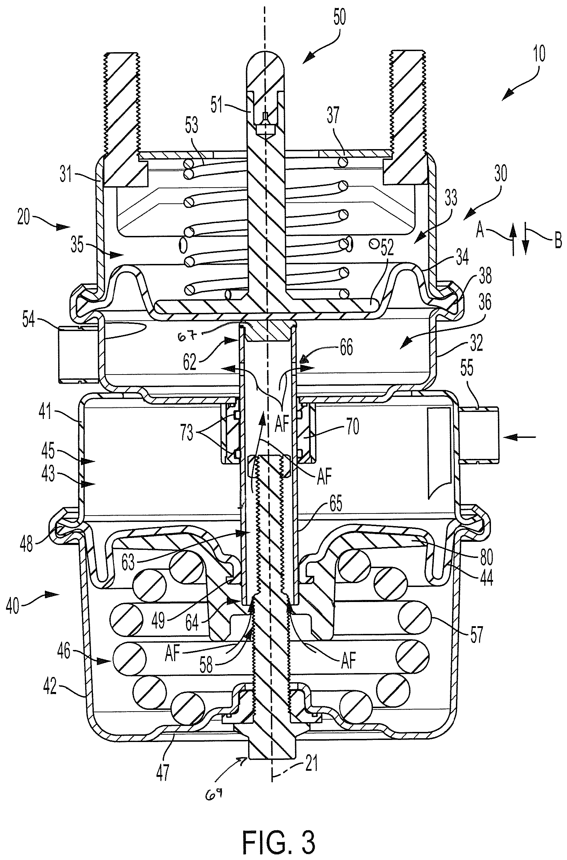

Turning now to Figs. 3-6, the spring brake actuator 20 is depicted in other operational states.

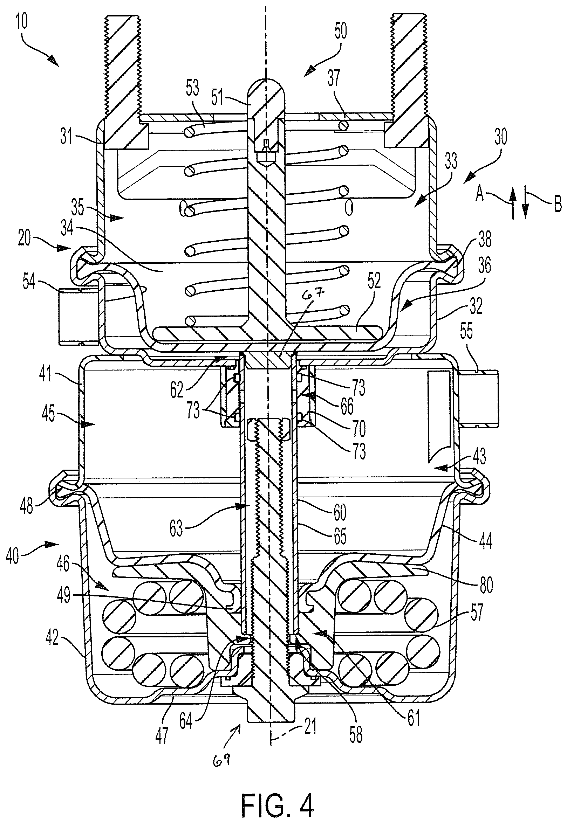

Fig. 3 depicts the spring brake actuator 20 being moved from the parking state (Fig. 1) toward a driving state (Fig. 4). To move the spring brake actuator 20 from the parking state, the operator releases the parking brake (e.g., manually release of a lever in the cab of the vehicle, engaging a button in the cab on the vehicle). Releasing the parking brake causes pressurized air to flow via the spring brake port 55 into the first spring chamber 45. As the air pressure in the first spring chamber 45 increases, the second diaphragm 44 is moved in a second axial direction (arrow B). The spring plate 80 and the actuator rod 60 are also moved in the second axial direction. The spring 57 is compressed between the spring plate 80 and the end wall 47. The return spring 53 axially extends, thereby retracting the rod 51 of the push rod 50 into the first service chamber 35.

As the first spring chamber 45 is pressurized, the volume of the first spring chamber 45 increases while the volume of the second spring chamber 46 decreases. As the volume of the second spring chamber 46 decreases, air (see arrows AF on Fig. 3) in the second spring chamber 46 flows through the opening 64, the bore 63, and the holes 66 into the second service chamber 36. As such, the air pressure in the second spring chamber 46 decreases.

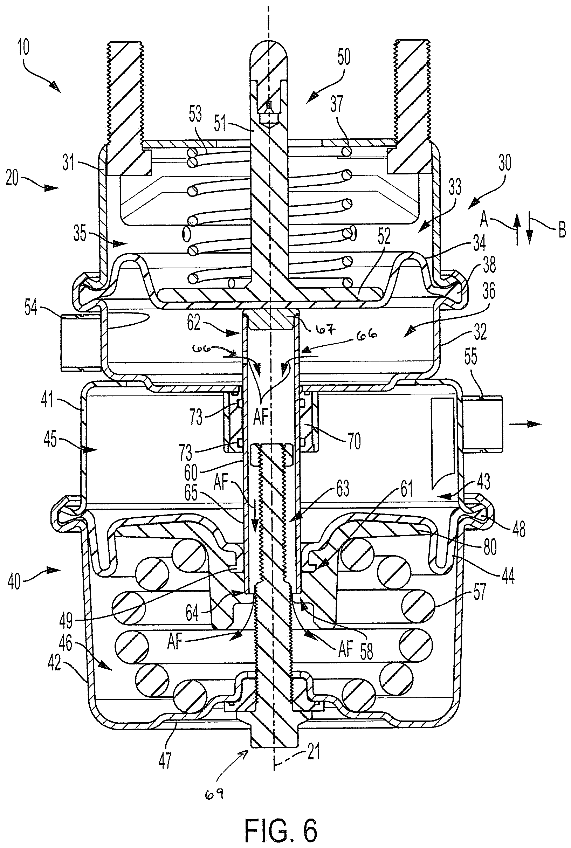

Similarly, as the first spring chamber 45 is depressurized, the volume of the first spring chamber 45 decreases while the volume of the second spring chamber 46 increases. As the volume of the second spring chamber 46 increases, air (see arrows AF on Fig. 6) in the second service chamber 36 flows through the opening 64, the bore 63, and the holes 66 into the second spring chamber 46.

The actuator rod 60 facilitates bi-directional flow of air between the service brake chamber 33 and the spring brake chamber 43. For example, as spring brake chamber 43 is pressurized, air flows from the spring brake chamber 43 through the actuator rod 60 to the service brake chamber 33, and as the spring brake chamber 43 is depressurized, air flows from the service brake chamber 33 through the actuator rod 60 to the spring brake chamber 43.

Note that the spring brake housing 40 is devoid of holes that would directly vent air in the second spring chamber 46 to atmosphere. For example, air in the second spring chamber 46 does not escape or vent through holes in the second spring shell 42. Conventional spring brake actuators often include breather holes to vent air from the spring brake chamber, and these breather holes potentially allow for moisture and/or debris to enter the spring chamber as air flows therethrough. Note that in certain examples, a pressure release device coupled to the service brake housing 30 or the hose connected to the service port 54 can be configured to exhaust excess air pressure from the second service chamber 36 when the air pressure is above a predetermined pressure.

Fig. 4 depicts the spring brake actuator 20 in the driving state in which no braking forces are applied to the wheels of the vehicle. The spring 57 is compressed between the spring plate 80 and the end wall 47. The actuator rod 60 is retracted into the spring brake chamber 43. The return spring 53 is elongated and extends in the service brake chamber 33, and the rod 51 of the push rod 50 is retracted into the service brake chamber 33. The portion of the actuator rod 60 with the holes 66 is located in the sleeve bore 71 between the gaskets 73 such that the guide sleeve 70 covers the holes 66 and prevents flow of air between the second spring chamber 46 and the second service chamber 36 (described further herein). Note that the guide sleeve 70 prevents air in the first spring chamber 45 from entering via the holes 66 in the actuator rod 60.

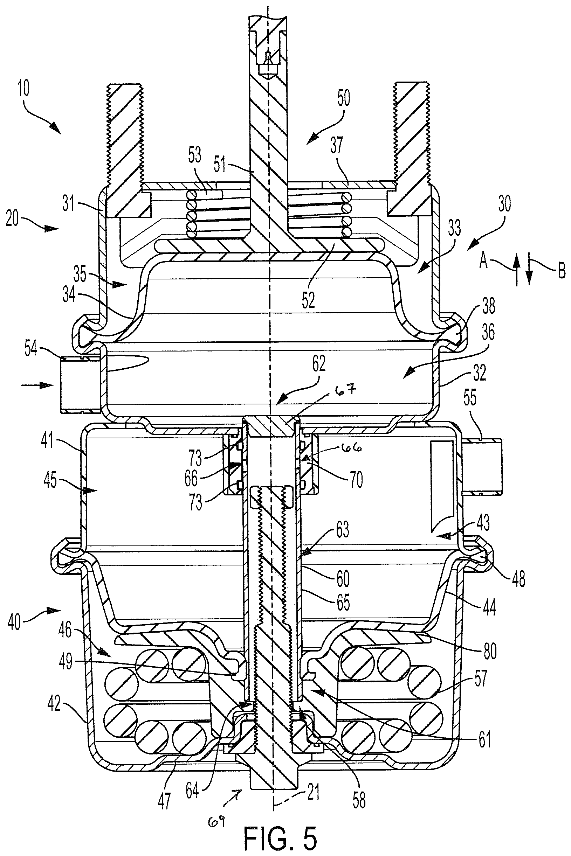

Fig. 5 depicts the spring brake actuator 20 in a service braking state in which the operator depresses a brake pedal (not depicted) to thereby apply the wheel brake to slow or stop the vehicle. When depressing the brake pedal, pressurized air is provided via the service port 54 to the second service chamber 36 such that the air pressure in the service brake chamber 33 moves the first diaphragm 34 in the first axial direction (arrow A) against the bias of the return spring 53. As such, the rod 51 moves in the first axial direction (arrow A) out of the service brake chamber 33 and braking forces are applied to the wheels of the vehicle. When the operator releases the brake pedal, the pressurized air in the second service chamber 36 of the service brake chamber 33 is released or exhausted via the service port 54 and the spring brake actuator 20 returns to the driving state (Fig. 4). Note that the pressurized air in the second service chamber 36 of the service brake chamber 33 does not enter the holes 66 in the actuator rod 60.

Fig. 6 depicts the spring brake actuator 20 being moved from the driving state (Fig. 4) toward the parking state (Fig. 1). To move the spring brake actuator 20 from the driving state, the operator engages the parking brake (e.g., manually release of a lever in the cab of the vehicle, engaging a button in the cab on the vehicle) thereby causing the pressurized air in the first spring chamber 45 of the spring brake chamber 43 to be is released or exhausted via the spring brake port 55. As the pressurized air is released, the forces opposing the spring forces in the spring 57 decrease and the spring 57 begins to decompress and extend in the first axial direction (arrow A). As such, the spring plate 80, the second diaphragm 44, and the actuator rod 60 are moved in the first axial direction and the volume of the second spring chamber 46 increases.

As the volume of the second spring chamber 46 increases and/or after the actuator rod 60 is moved in the first axial direction (arrow A), the holes 66 clear the gaskets 73 and/or the guide sleeve 70 and air in the second service chamber 36 flows from the second service chamber 36 through the holes 66, the bore 63, and the opening 64 into the second spring chamber 46. The actuator rod 60 acts on the first diaphragm 34 and the push rod 50 and against the spring forces applied by the return spring 53. The rod 50 is moved (e.g., extended) further out of the service brake chamber 36 such that braking forces are applied to the wheels of the vehicle.

In certain examples, a spring brake actuator for a vehicle includes a spring brake housing defining a spring brake chamber, a service brake housing defining a service brake chamber, a push rod configured to extend from the service brake chamber to engage a wheel brake of the vehicle, and an actuator rod in the spring brake chamber and movable to extend into and retract from the service brake chamber. As the spring brake chamber is pressurized, air flows from the spring brake chamber through the actuator rod to the service brake chamber, and as the spring brake chamber is depressurized, air flows from the service brake chamber through the actuator rod to the spring brake chamber.

In independent aspects, the spring brake housing includes a first spring shell and a second spring shell, and wherein the second spring shell is devoid of holes that allow air to pass into the spring brake chamber from atmosphere and/or out of the spring brake chamber to the atmosphere as the spring brake chamber is pressurized and depressurized. In independent aspects, the actuator rod includes an opening, a hole, and a bore extending between the opening and the hole. The air flows through the opening, the hole, and the bore as the air flows between the service brake chamber and the spring brake chamber. In independent aspects, the actuator rod includes a first rod end and an opposite second rod end, and the opening is at the first rod end and the hole is at the second rod end. In independent aspects, a second diaphragm is located in the spring brake chamber such that the second diaphragm divides the spring brake chamber into a first spring chamber and a second spring chamber, the second diaphragm includes a diaphragm bore in which the actuator rod is received. In independent aspects, a spring plate is in the spring brake chamber, and the spring plate defines a channel in which the second diaphragm is received. In independent aspects, at least a portion of the second diaphragm is sandwiched between the actuator rod and the spring plate. In independent aspects, the second diaphragm includes a flange received in the channel and a lip that is coupled to the spring brake housing. In independent aspects, a guide sleeve is in the spring brake chamber and configured to guide movement of the actuator rod into and out of the service brake chamber. In independent aspects, the actuator rod includes a hole through which air flows as the air flows between the service brake chamber and the spring brake chamber, and when the actuator rod is retracted from the service brake chamber, the guide sleeve covers the hole. In independent aspects, the actuator rod includes a hole through which air flows as the air flows between the service brake chamber and the spring brake chamber and the guide sleeve includes a pair of gaskets such that fluid-tight seals are formed between the guide sleeve and the actuator rod. When the actuator rod is retracted from the service brake chamber, the hole is located between the pair of gaskets and the pair of gaskets prevent air flow between the spring brake chamber and the service brake chamber. In independent aspects, the actuator rod includes a hole through which air flows as the air flows between the service brake chamber and the spring brake chamber and a guide sleeve is in the spring brake chamber that guides movement of the actuator rod. The guide sleeve includes a pair of gaskets that form fluid-tight seals with the actuator rod such that when the hole is located between the gaskets, air does not flow between the service brake chamber and the spring brake chamber. In independent aspects, the guide sleeve includes a pair of channels and each channel in the pair of channels receives one gasket of the pair of gaskets. In independent aspects, the spring brake actuator is moveable into and between a braking state in which the spring brake actuator applies braking forces to the vehicle and a driving state in which the spring brake actuator does not apply braking forces to the vehicle. When the spring brake chamber is pressurized the push rod is retracted into the service brake chamber, the actuator rod is retracted from the service brake chamber, air flows from the spring brake chamber through the actuator rod to the service brake chamber, and the spring brake actuator is moved from the braking state to the driving state. When the spring brake chamber is depressurized the push rod is extended further from the service brake chamber, the actuator rod is extended into the service brake chamber, air flows from the service brake chamber through the actuator rod to the spring brake chamber, and the spring brake actuator is moved from the driving state to the braking state. In independent aspects, a first diaphragm is located in the service brake chamber such that the first diaphragm divides the service brake chamber into a first service chamber and a second service chamber, a return spring located in the first service chamber, a second diaphragm located in the spring brake chamber such that the second diaphragm divides the spring brake chamber into a first spring chamber and a second spring chamber, and a spring located in the second spring chamber. As the first spring chamber is pressurized, air flows from the second spring chamber through the actuator rod to the second service chamber, and as the first spring chamber is depressurized, air flows from the second service chamber through the actuator rod to the second spring chamber. In independent aspects, the actuator rod is coupled to the second diaphragm and is moved with the second diaphragm. In independent aspects, a spring brake port is on the spring brake housing that is configured to permit admission of pressurizd air into the first spring chamber and release of the pressurized air from the first spring chamber. In independent aspects, the second diaphragm includes a diaphragm bore in which the actuator rod is received and a spring plate is in the spring brake chamber, the spring plate defines a channel in which the second diaphragm is received. At least a portion of the second diaphragm is sandwiched between the actuator rod and the spring plate. In independent aspects, a guide sleeve is in the spring brake chamber and configured to guide movement of the actuator rod into and out of the service brake chamber and the actuator rod includes a hole through which air flows as the air flows between the service brake chamber and the spring brake chamber. The guide sleeve includes a pair of gaskets such that fluid-tight seals are formed between the guide sleeve and the actuator rod, and when the actuator rod is retracted from the service brake chamber, the hole is located between the pair of gaskets and the pair of gaskets prevent air flow between the spring brake chamber and the service brake chamber.

In certain examples, a spring brake actuator for a vehicle includes a spring brake housing defining a spring brake chamber, a service brake housing defining a service brake chamber, a push rod configured to extend from the service brake chamber to engage a wheel brake of the vehicle, and an actuator rod in the spring brake chamber and movable to extend into and retract from the service brake chamber. As the spring brake chamber is pressurized, the actuator rod is configured to vent air therethrough from the spring brake chamber to the service brake chamber, and as the spring brake chamber is depressurized, the actuator rod is configured to vent air therethrough from the service brake chamber to the spring brake chamber.

Citations to a number of references are made herein. In the event that there is an inconsistency between a definition of a term in the specification as compared to a definition of the term in a cited reference, the term should be interpreted based on the definition in the specification.

In the present description, certain terms have been used for brevity, clarity, and understanding. No unnecessary limitations are to be inferred therefrom beyond the requirement of the prior art because such terms are used for descriptive purposes and are intended to be broadly construed. The different apparatuses, systems, and method steps described herein may be used alone or in combination with other apparatuses, systems, and methods. It is to be expected that various equivalents, alternatives, and modifications are possible within the scope of the appended claims.

This written description uses examples to disclose the invention and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

The following clauses set out features of the invention which may not be presently claimed, but which may form the basis for amendments or future divisional applications.

### CLAUSES

1. A spring brake actuator for a vehicle, the spring brake actuator comprising:
   a spring brake housing defining a spring brake chamber;
   a service brake housing defining a service brake chamber;
   a push rod configured to extend from the service brake chamber to engage a wheel brake of the vehicle;
   an actuator rod in the spring brake chamber and movable to extend into and retract from the service brake chamber;
   wherein as the spring brake chamber is pressurized, air flows from the spring brake chamber through the actuator rod to the service brake chamber; and
   wherein as the spring brake chamber is depressurized, air flows from the service brake chamber through the actuator rod to the spring brake chamber.
2. The spring brake actuator according to clause 1, wherein the spring brake housing includes a first spring shell and a second spring shell, and wherein the second spring shell is devoid of holes that allow air to pass into the spring brake chamber from atmosphere and/or out of the spring brake chamber to the atmosphere as the spring brake chamber is pressurized and depressurized.
3. The spring brake actuator according clause 1, wherein the actuator rod includes:
   an opening, a hole, and a bore extending between the opening and the hole, wherein the air flows through the opening, the hole, and the bore as the air flows between the service brake chamber and the spring brake chamber.
4. The spring brake actuator according to clause 3, wherein the actuator rod includes a first rod end and an opposite second rod end, and wherein the opening is at the first rod end and the hole is at the second rod end.
5. The spring brake actuator according to clause 1, further comprising a second diaphragm located in the spring brake chamber such that the second diaphragm divides the spring brake chamber into a first spring chamber and a second spring chamber, the second diaphragm includes a diaphragm bore in which the actuator rod is received.
6. The spring brake actuator according to clause 5, further comprising a spring plate in the spring brake chamber, the spring plate defines a channel in which the second diaphragm is received.
7. The spring brake actuator according to clause 6, wherein at least a portion of the second diaphragm is sandwiched between the actuator rod and the spring plate.
8. The spring brake actuator according to clause 6, wherein the second diaphragm includes a flange received in the channel and a lip that is coupled to the spring brake housing.
9. The spring brake actuator according to clause 1, further comprising a guide sleeve in the spring brake chamber and configured to guide movement of the actuator rod into and out of the service brake chamber.
10. The spring brake actuator according to clause 9, wherein the actuator rod includes a hole through which the air flows as the air flows between the service brake chamber and the spring brake chamber; and
   wherein when the actuator rod is retracted from the service brake chamber, the guide sleeve covers the hole.
11. The spring brake actuator according to clause 9, wherein the actuator rod includes a hole through which air flows as the air flows between the service brake chamber and the spring brake chamber; and
   wherein the guide sleeve includes a pair of gaskets such that fluid-tight seals are formed between the guide sleeve and the actuator rod;
   wherein when the actuator rod is retracted from the service brake chamber, the hole is located between the pair of gaskets and the pair of gaskets prevent air flow between the spring brake chamber and the service brake chamber.
12. The spring brake actuator according to clause 1, wherein the actuator rod includes a hole through which air flows as the air flows between the service brake chamber and the spring brake chamber; and further comprising,
   a guide sleeve in the spring brake chamber that guides movement of the actuator rod, the guide sleeve includes a pair of gaskets that form fluid-tight seals with the actuator rod such that when the hole is located between the gaskets, air does not flow between the service brake chamber and the spring brake chamber.
13. The spring brake actuator according to clause 12, wherein the guide sleeve includes a pair of channels and each channel in the pair of channels receives one gasket of the pair of gaskets.
14. The spring brake actuator according to clause 1, wherein the spring brake actuator is moveable into and between a braking state in which the spring brake actuator applies braking forces to the vehicle and a driving state in which the spring brake actuator does not apply braking forces to the vehicle;
   wherein when the spring brake chamber is pressurized:
      the push rod is retracted into the service brake chamber;
      the actuator rod is retracted from the service brake chamber;
      air flows from the spring brake chamber through the actuator rod to the service brake chamber; and
      the spring brake actuator is moved from the braking state to the driving state; and
   wherein when the spring brake chamber is depressurized:
      the push rod is extended further from the service brake chamber;
      the actuator rod is extended into the service brake chamber;
      air flows from the service brake chamber through the actuator rod to the spring brake chamber; and
      the spring brake actuator is moved from the driving state to the braking state.
15. The spring brake actuator according to clause 1, further comprising:
   a first diaphragm located in the service brake chamber such that the first diaphragm divides the service brake chamber into a first service chamber and a second service chamber;
   a return spring located in the first service chamber;
   a second diaphragm located in the spring brake chamber such that the second diaphragm divides the spring brake chamber into a first spring chamber and a second spring chamber; and
   a spring located in the second spring chamber;
   wherein as the first spring chamber is pressurized, air flows from the second spring chamber through the actuator rod to the second service chamber; and
   wherein as the first spring chamber is depressurized, air flows from the second service chamber through the actuator rod to the second spring chamber.
16. The spring brake actuator according to clause 15, wherein the actuator rod is coupled to the second diaphragm and is moved with the second diaphragm.
17. The spring brake actuator according to clause 16, further comprising a spring brake port on the spring brake housing that is configured to permit admission of pressurizd air into the first spring chamber and release of the pressurized air from the first spring chamber.
18. The spring brake actuator according to clause 15, wherein the second diaphragm includes a diaphragm bore in which the actuator rod is received, and further comprising:
   a spring plate in the spring brake chamber, the spring plate defines a channel in which the second diaphragm is received; and
   wherein at least a portion of the second diaphragm is sandwiched between the actuator rod and the spring plate.
19. The spring brake actuator according to clause 15, further comprising a guide sleeve in the spring brake chamber and configured to guide movement of the actuator rod into and out of the service brake chamber;
   wherein the actuator rod includes a hole through which air flows as the air flows between the service brake chamber and the spring brake chamber; and
   wherein the guide sleeve includes a pair of gaskets such that fluid-tight seals are formed between the guide sleeve and the actuator rod;
   wherein when the actuator rod is retracted from the service brake chamber, the hole is located between the pair of gaskets and the pair of gaskets prevent air flow between the spring brake chamber and the service brake chamber.
20. A spring brake actuator for a vehicle, the spring brake actuator comprising:
   a spring brake housing defining a spring brake chamber;
   a service brake housing defining a service brake chamber;
   a push rod configured to extend from the service brake chamber to engage a wheel brake of the vehicle; and
   an actuator rod in the spring brake chamber and movable to extend into and retract from the service brake chamber;
   wherein as the spring brake chamber is pressurized, the actuator rod is configured to vent air therethrough from the spring brake chamber to the service brake chamber; and
   wherein as the spring brake chamber is depressurized, the actuator rod is configured to vent air therethrough from the service brake chamber to the spring brake chamber.

## Claims

1. A spring brake actuator for a vehicle, the spring brake actuator comprising:
a spring brake housing defining a spring brake chamber;
a service brake housing defining a service brake chamber;
a push rod configured to extend from the service brake chamber to engage a wheel brake of the vehicle;
an actuator rod in the spring brake chamber and movable to extend into and retract from the service brake chamber;
wherein as the spring brake chamber is pressurized, air flows from the spring brake chamber through the actuator rod to the service brake chamber; and
wherein as the spring brake chamber is depressurized, air flows from the service brake chamber through the actuator rod to the spring brake chamber.

2. The spring brake actuator according to claim 1, wherein the spring brake housing includes a first spring shell and a second spring shell, and wherein the second spring shell is devoid of holes that allow air to pass into the spring brake chamber from atmosphere and/or out of the spring brake chamber to the atmosphere as the spring brake chamber is pressurized and depressurized.

3. The spring brake actuator according claim 1 or 2, wherein the actuator rod includes:
an opening, a hole, and a bore extending between the opening and the hole, wherein the air flows through the opening, the hole, and the bore as the air flows between the service brake chamber and the spring brake chamber.

4. The spring brake actuator according to claim 3, wherein the actuator rod includes a first rod end and an opposite second rod end, and wherein the opening is at the first rod end and the hole is at the second rod end.

5. The spring brake actuator according to any one of the preceding claims, further comprising a diaphragm located in the spring brake chamber such that the diaphragm divides the spring brake chamber into a first spring chamber and a second spring chamber, the second diaphragm includes a diaphragm bore in which the actuator rod is received.

6. The spring brake actuator according to claim 5, further comprising a spring plate in the spring brake chamber, the spring plate defines a channel in which the diaphragm is received.

7. The spring brake actuator according to claim 6, wherein at least a portion of the diaphragm is sandwiched between the actuator rod and the spring plate.

8. The spring brake actuator according to claim 6 or 7, wherein the diaphragm includes a flange received in the channel and a lip that is coupled to the spring brake housing.

9. The spring brake actuator according to any one of the preceding claims, further comprising a guide sleeve in the spring brake chamber and configured to guide movement of the actuator rod into and out of the service brake chamber.

10. The spring brake actuator according to claim 9 as dependent on claim 3,
wherein when the actuator rod is retracted from the service brake chamber, the guide sleeve covers the hole.

11. The spring brake actuator according to claim 10,
wherein the guide sleeve includes a pair of gaskets such that fluid-tight seals are formed between the guide sleeve and the actuator rod;
wherein when the actuator rod is retracted from the service brake chamber, the hole is located between the pair of gaskets and the pair of gaskets prevent air flow between the spring brake chamber and the service brake chamber.

12. The spring brake actuator according to claim 11, wherein the guide sleeve includes a pair of channels and each channel in the pair of channels receives one gasket of the pair of gaskets.

13. The spring brake actuator according to any one of the preceding claims, wherein the spring brake actuator is moveable into and between a braking state in which the spring brake actuator applies braking forces to the vehicle and a driving state in which the spring brake actuator does not apply braking forces to the vehicle;
wherein when the spring brake chamber is pressurized:
the push rod is retracted into the service brake chamber;
the actuator rod is retracted from the service brake chamber;
air flows from the spring brake chamber through the actuator rod to the service brake chamber; and
the spring brake actuator is moved from the braking state to the driving state; and
wherein when the spring brake chamber is depressurized:
the push rod is extended further from the service brake chamber;
the actuator rod is extended into the service brake chamber;
air flows from the service brake chamber through the actuator rod to the spring brake chamber; and
the spring brake actuator is moved from the driving state to the braking state.

14. The spring brake actuator according to claim 5, wherein the diaphragm in the spring brake chamber is a second diaphragm, the spring brake actuator further comprising:
a first diaphragm located in the service brake chamber such that the first diaphragm divides the service brake chamber into a first service chamber and a second service chamber;
a return spring located in the first service chamber; and
a spring located in the second spring chamber;
wherein as the first spring chamber is pressurized, air flows from the second spring chamber through the actuator rod to the second service chamber; and
wherein as the first spring chamber is depressurized, air flows from the second service chamber through the actuator rod to the second spring chamber.

15. The spring brake actuator according to claim 14, wherein the actuator rod is coupled to the second diaphragm and is moved with the second diaphragm, and wherein optionally the spring brake actuator further comprises a spring brake port on the spring brake housing that is configured to permit admission of pressurized air into the first spring chamber and release of the pressurized air from the first spring chamber.
